# EUROPÄISCHE PATENTSCHRIFT

(11) **EP 0 841 127 B1**
(45) Veröffentlichungstag und Bekanntmachung des Hinweises auf die Patenterteilung: **19.03.2003**
(21) Anmeldenummer: 97810792.8
(22) Anmeldetag: 23.10.1997
(51) Int. Cl.: B25F 5/00, F16D 59/02, B24B 23/00, B24B 55/00, B25D 9/26, B25D 16/00

(54) **Motorisch betriebenes Handgerät mit einer Sicherheitseinrichtung für den Fall einer Werkzeugblockage**
Motor-driven hand tool with safety device in case of jammed tool
Appareil à main entraîné par moteur avec un dispositif de sécurité dans le cas d'outil de blocage

(30) Priorität: 11.11.1996 DE 19646381
(43) Veröffentlichungstag der Anmeldung: 13.05.1998
(73) Patentinhaber: HILTI Aktiengesellschaft, 9494 Schaan (LI)
(72) Erfinder: Stöck, Maximilian, 9478 Azmoos (CH); Thiel, Arno, 80687 München (DE); Kristen, Ferdinand, 82110 Germering (DE)
(74) Vertreter: Wildi, Roland

(56) Entgegenhaltungen:
- EP-A- 0 326 783
- EP-A- 0 486 843
- WO-A-88/06508
- DE-A- 3 919 427
- FR-A- 2 647 978

## Beschreibung

Die Erfindung betrifft ein motorisch betriebenes Handgerät, insbesondere ein Bohrgerät, mit einer aus einem Gehäuse ragenden Drehspindel zur Übertragung einer Drehbewegung von einem Antriebsmotor auf ein Werkzeug und einer Sicherheitseinrichtung, die bei plötzlich blockierendem Werkzeug ein Auslenken des Gehäuses des Handgeräts um die Achse der Drehspindel unterbindet, wobei die Sicherheitseinrichtung mittels einer Detektionseinrichtung für den Blockierfall des Werkzeugs aktivierbar ist.

Handgeräte der gattungsgemässen Art, wie beispielsweise Bohrgeräte oder Trennschleifgeräte, werden vor allem im professionellen Handwerkerbereich, jedoch in steigendem Masse auch von Heimwerkern angewendet. Im Betrieb der Handgeräte besteht die Gefahr, dass das in der Drehspindel des Gerätes gehalterte Werkzeug durch fehlerhafte Bedienung des Anwenders oder beispielsweise bei Eisentreffern beim Erstellen von Bohrungen in armiertem Beton verklemmt. Durch die plötzliche Blockierung der Drehspindel treten hohe Reaktionsdrehmomente auf, die zu einem Auslenken des Gehäuses um die Achse der Drehspindel führen. Die Bedienperson ist in der Regel nicht auf eine solche Reaktion gefasst und wird durch das Auslenken des Handgeräts überrascht. Dadurch kann ihr das Handgerät aus den Händen gerissen werden oder die Bedienperson kann beim Arbeiten in exponierten Lagen, wie beispielsweise auf Gerüsten oder auf Leitern, aus dem Gleichgewicht und in gefährliche Situationen gebracht werden.

Um solche Situationen zu vermeiden, sind in der Vergangenheit verschiedene Massnahmen vorgeschlagen worden, bei denen das Prinzip einer trägen Masse angewendet wird, um beim Auslenken des Handgeräts eine drehfeste Kopplung zwischen dem Gehäuse und dem blockierenden Werkzeug zu gewährleisten. Ein Beispiel für eine derartige Lösung ist in der DE-A-43 00 021 zu finden. Insbesondere ist bei dem dort beschriebenen Handgerät ein mit dem Gehäuse verbundener mechanischer Riegel zur formschlüssigen Blockierung der Drehspindel vorgeschlagen, der beim plötzlichen Auslenken des Handgeräts über eine träge Masse aktiviert wird. Die auf dem Prinzip der trägen Masse beruhenden Sicherheitseinrichtungen werden erst durch das ruckartige Verschenken des Gehäuses aktiviert. Daher kann es bei Handgeräten, die mit einer derartigen rein mechanisch wirkenden Sicherheitseinrichtung ausgestattet sind, immer noch zu relativ grossen Auslenkwinkeln kommen.

Aus der EP-B-0 486 843 ist ein Handgerät bekannt, bei dem ein im Antriebsstrang für die Drehspindel mit Schlingenfederkupplungen ausgestattetes Handgerät eine Sicherheitseinrichtung aufweist, die mit einer Detektoreinrichtung für den Blockierfall des Werkzeugs zusammenwirkt. Bei der Sicherheitseinrichtung handelt es sich um eine weitere Schlingenfederkupplung, die bei Detektion eines Blockierfalls elektronisch aktivierbar ist und über eine Bremsfeder die Rotation des Gehäuses um eine Antriebswelle unterbinden soll. Zwar wird bei diesem bekannten Handgerät die Sicherheitseinrichtung nicht mehr über eine relativ langsam reagierende träge Masse aktiviert. Vielmehr wird nach dem Erkennen eines Blockierfalls ein elektronisches Signal generiert, aufgrund dessen eine Magnetspule bestromt wird, die Bestanteil einer elektromagnetischen Bremse ist. Die elektromagnetische Bremse wirkt mit einem Schaltgehäuse zusammen, das schliesslich zu einem Zusammenziehen der Schlingenfederkupplung und zu einer drehfesten Kopplung zwischen Antriebswelle und Gehäuse führt. Diese vorgeschlagene Sicherheitseinrichtung ist relativ aufwendig in seiner Konstruktion und ist nur für Handgeräte konzipiert, die im Antriebsstrang der Drehspindel mit Schlingenfederkupplungen ausgestattet sind. Die Schlingenfeder ist im normalen Betriebszustand im Abstand von der Antriebswelle angeordnet. Im Blockierfall muss zunächst dieser Abstand überbrückt werden, um das Gehäuse und die Antriebswelle drehfest zu koppeln. Dies führt zu einer gewissen Ansprechverzögerung der Sicherheitseinrichtung, was für die Bedienperson unakzeptable Auslenkwinkel des Handgeräts zur Folge haben kann.

Die WO 88/06508, EP326783A zeigt ein motorisch betriebenes Handgerät, insbesondere Bohrgerät, mit einer aus einem Gehäuse ragenden Drehspindel zur Übertragung einer Drehbewegung von einem Antriebsmotor auf ein Werkzeug und einer Sicherheitseinrichtung , die bei plötzlich blockierendem Werkzeug ein Auslenken des Gehäuses des Handgeräts um die Achse der Drehspindel unterbindet, wobei die Sicherheitseinrichtung mittels einer Detektionseinrichtung für den Blockierfall des Werkzeugs aktivierbar ist, wobei die Sicherheitseinrichtung innerhalb des Gehäuses in Nachbarschaft zur Drehspindel angeordnet ist und wenigstens zwei, im Aktivierungsfall reibschlüssig zusammenwirkende Bauteile umfasst, von denen eines mit dem Gehäuse und das andere mit der Drehspindel verbunden ist und die im Blockierfall des Werkzeugs das Gehäuse und die Drehspindel durch Reibkraft drehfest miteinander koppeln, und wobei im Antriebsstrang für die Drehspindel eine Überlastrutschkupplung vorgesehen ist, die in Serie zur Sicherheitseinrichtung angeordnet ist.

Aufgabe der vorliegenden Erfindung ist es daher, ein Handgerät zu schaffen, das mit einer Sicherheitseinrichtung ausgestattet ist, die für die Bedienperson unakzeptable Auslenkwinkel des Handgeräts im Blockierfall verhindert. Die Sicherheitseinrichtung soll ein sehr schnelles Ansprechverhalten aufweisen und einfach in der Konstruktion sein. Insbesondere soll ein Handgerät mit einer Sicherheitseinrichtung geschaffen werden, die in Verbindung mit einer Detektionseinrichtungen für ein frühzeitiges. Erkennen des Blockierfalls einsetzbar und durch diese aktivierbar ist. Eine Überlastung des Antriebsmotors im Blockierfall des Werkzeugs soll vermieden werden können. Zudem soll das Handgerät auch für Fälle, in denen aufgrund örtlicher Gegebenheiten nur eine beschränkte Auslenkung um kleine Schwenkwinkel möglich ist, beispielsweise bei Bohrarbeiten in Ecken, bei denen das Handgerät an der Wand anliegt, für den Anwender ausreichende Sicherheit bieten.

Diese Aufgaben werden durch ein motorisch betriebenes Handgerät gelöst, welches eine die im kennzeichnenden Abschnitt des Patentanspruchs 1 angeführten Merkmale aufweist. Das erfindungsgemässe motorisch betriebene Handgerät, insbesondere ein Bohrgerät, umfasst eine aus einem Gehäuse ragenden Drehspindel zur Übertragung einer Drehbewegung von einem Antriebsmotor auf ein Werkzeug und eine Sicherheitseinrichtung, die bei plötzlich blockierendem Werkzeug ein Auslenken des Gehäuses des Handgeräts um die Achse der Drehspindel unterbindet und mittels einer Detektionseinrichtung für den Blockierfall des Werkzeugs aktivierbar ist. Die Sicherheitseinrichtung ist innerhalb des Gehäuses in Nachbarschaft zur Drehspindel angeordnet und umfasst wenigstens zwei, im Aktivierungsfall reibschlüssig zusammenwirkende Bauteile, von denen eines mit dem Gehäuse und das andere mit der Drehspindel verbunden ist. Im Blockierfall des Werkzeugs koppeln die reibschlüssig zusammenwirkenden Bauteile das Gehäuse und die Drehspindel drehfest miteinander. Zusätzlich ist im Antriebsstrang für die Drehspindel, in Serie zur Sicherheitseinrichtung, eine Überlastrutschkupplung vorgesehen.

Die Sicherheitseinrichtung ist unmittelbar an der Drehspindel angeordnet und wird über ein von der Detektionseinrichtung generiertes Signal aktiviert. Indem die Sicherheitseinrichtung zwei reibschlüssig zusammenwirkende Bauteile umfasst, können diese durch ihre Dimensionierung an die üblicherweise auftretenden Reaktionsdrehmomente angepasst werden. Die im Aktivierungsfall reibschlüssig zusammenwirkenden Bauteile sind in unmittelbarer Nachbarschaft zueinander angeordnet. Dadurch müssen für die Erstellung der reibschlüssigen Verbindung nur sehr kleine Abstände überwunden werden, wodurch es kaum zu Verzögerungen bei der drehfesten Kopplung von Drehspindel und Gehäuse kommt. Auf diese Weise können die auftretenden Schwenkwinkel des Gehäuses sehr klein gehalten werden. Die Konstruktion der erfindungsgemäss angeordneten Sicherheitseinrichtung ist sehr einfach und kostengünstig zu realisieren und erfordert nur wenig Platz innerhalb des Gehäuses des Handgeräts. Die im Antriebsstrang vorgesehene Überlastrutschkupplung ist in Serie zur Sicherheitseinrichtung angeordnet. Sie dient im Normalfall dem Schutz des Antriebsmotors, insbesondere im Blockierfall des Werkzeugs. Die serielle Anordnung der Überlastrutschkupplung bietet zudem dem Anwender zusätzlichen Schutz, beispielsweise wenn aufgrund örtlicher Gegebenheiten das Handgerät im Blockierfall nicht Auslenken kann und die Detektionseinrichtung, welche den Blockierfall vielfach aus der Messung von Drehbeschleunigungen ermittelt, nicht anspricht. In diesem Fall erhält die Sicherheitseinrichtung kein Steuersignal und wird daher auch nicht aktiviert. Dafür spricht bei einem bestimmten Drehmoment die Überlastrutschkupplung an und trennt den Antriebsstrang zwischen dem Antriebsmotor und der Drehspindel, um den Anwender zu schützen.

Um eine grösstmögliche Sicherheit für den Anwender zu bieten und ein zuverlässiges Ansprechen der Sicherheitseinrichtung im Blockierfall des Werkzeugs zu gewährleisten, ist die Sicherheitseinrichtung mit Vorteil elektromechanisch aktivierbar.

Die Sicherheitseinrichtung umfasst ein Schubelement, das durch eine Feder in reibschlüssiger Richtung vorgespannt ist. Bei ausgeschaltetem Handgerät wird durch die Federkraft das Schublement in reibschlüssige Verbindung mit der Drehspindel gezwungen. Dadurch ist ein fehlerunabhängiges Ansprechen der Sicherheitseinrichtung gewährleistet.

In einer vorteilhaften Ausführungsvariante der Erfindung ist das federbelastete Schubelement im Magnetfeld einer Magnetspule angeordnet, die im Betrieb bestromt ist und bei Detektion des Blockierfalls stromlos schaltbar ist. Dadurch ist die Sicherheitseinrichtung aktivierbar und die zusammenwirkenden Bauteile der Sicherheitseinrichtung sind in Reibschluss bringbar. In diesem Fall reduziert sich die Aktivierung der Sicherheitseinrichtung auf die automatische Betätigung einer Schaltanordnung für die Bestromung der Magnetspule. Dabei wird das im Magnetfeld gegen die Federkraft zurückgehaltene Schubelement automatisch freigegeben, um die drehfeste Kopplung des Gehäuses und des drehspindelseitigen Antriebsstrangs zu bewirken. Auch im Fall eines Stromausfalls wird durch die gewählte Anordnung automatisch die Sicherheitseinrichtung aktiviert.

Indem wenigstens eines der zusammenwirkenden Bauteile der Sicherheitseinrichtung einen Reibbelag umfasst, der auswechselbar ist, ist ein einfacher Ersatz dieses Verschleissteils möglich. Auch kann durch die Wahl eines geeigneten Reibbelags das Ansprechverhalten der Sicherheitseinrichtung beeinflusst werden.

Mit Vorteil ist das mit der Drehspindel verbundene Bauteil der Sicherheitseinrichtung ein von der Drehspindel abragender Flansch. Das im Magnetfeld der Magnetspule axial verschiebbare Schubelement ist bei Fehlen des Magnetfelds durch Federkraft gegen die Flachseite des umlaufenden Flansches gepresst. Bei dieser Konstruktion der Sicherheitseinrichtung wirken im Aktivierungsfall plane Flächen zusammen. Die Flächen können im Rahmen des zur Verfügung stehenden Platzangebots innerhalb des Gehäuses ausreichend gross gestaltet werden, um ein sehr schnelles Ansprechen der Sicherheitseinrichtung zu gewährleisten. Die Herstellung des Flansches und der planen Fläche am Schubelement ist relativ einfach und kostengünstig durchzuführen.

Im folgenden wird die Erfindung mit allen ihr als wesentlich zugehörigen Einzelheiten unter Bezugnahme auf ein in den schematischen Zeichnungen dargestelltes Ausführungsbeispiel näher erläutert. Es zeigen:
Fig. 1 ein Blockschema eines erfindungsgemässen Handgeräts;
Fig. 2 eine teilweise geschnittene Darstellung des Handgeräts; und
Fig. 3 die Sicherheitseinrichtung aus Fig. 2 im Schnitt und in vergrössertem Massstab.

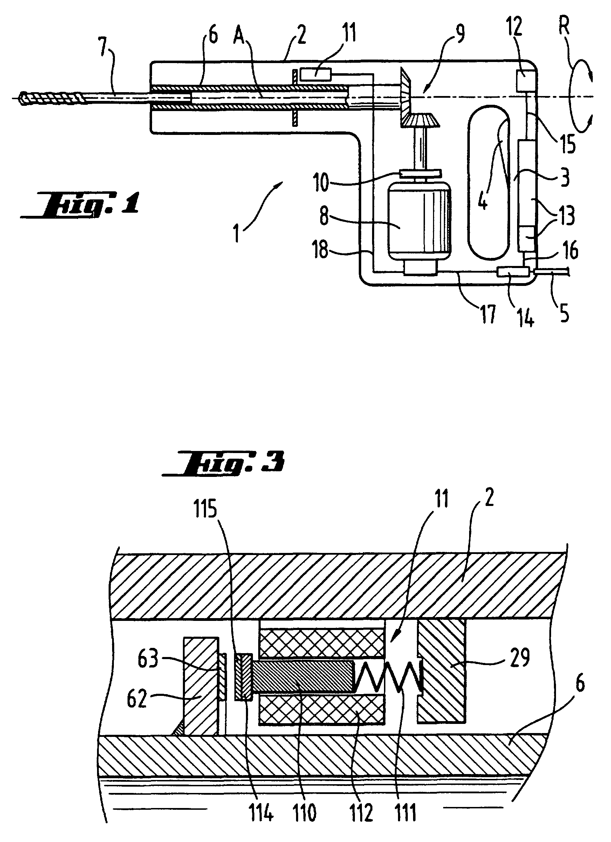

In der schematischen Blockdarstellung in Fig. 1 ist ein erfindungsgemäss ausgestattetes Handgerät gesamthaft mit dem Bezugszeichen 1 versehen. Bei dem beispielsweise dargestellten Handgerät 1 handelt es sich um ein Bohrgerät. Bohrgeräte der gattungsgemässen Art weisen üblicherweise ein Schlagwerk auf, mit dem während des Betriebs axiale Schläge auf das Werkzeug ausgübt werden. Aus Gründen der Übersichtlichkeit wird in der Blockdarstellung der Fig. 1 auf eine Darstellung des Schlagwerks verzichtet. Das Handgerät weist ein üblicherweise aus Kunststoff bestehendes Gehäuse 2 auf, an dem ein Griffteil 3 befestigt ist. Die Energieversorgung des Handgeräts erfolgt über ein unter 5 angedeutetes Anschlusskabel. Ein im Griffteil vorgesehener Schalter 4 dient der Inbetriebnahme des Handgeräts 1. Innerhalb des Gehäuses 2 ist eine Drehspindel 6 angeordnet, die an der dem Griffteil 3 gegenüberliegenden Seite aus dem Gehäuse 2 ragt und zur Aufnahme eines von der Drehspindel 6 antreibbaren Werkzeugs 7, beispielsweise eines Bohrwerkzeugs, dient. Die Drehspindel 6 ist über einen Antriebsstrang 9 bzw. ein Getriebe mit einem Antriebsmotor 8 verbunden. Der Antriebsstrang 9 sorgt für eine Übertragung der Drehbewegung des Antriebsmotors 8 auf die Drehspindel 6 mit dem Werkzeug 7. Die Rotation der Drehspindel um die Achse A ist in Fig. 1 durch den Doppelpfeil R symbolisiert, um den bei vielen Handgeräten wahlweise möglichen Rechts- oder Linkslauf der Drehspindel 6 anzudeuten.

Zur rechtzeitigen Erfassung von den Anwender gefährdenden Situationen durch Werkzeugblockieren ist das Handgerät mit einer Detektionseinrichtung 12 ausgestattet. Die Detektionseinrichtung 12 umfasst Sensoren, die ein Auslenken des Handgerätes 1 um die Drehachse A der Drehspindel 6 detektieren. Die erfassten Messwerte werden digitalisiert und an eine Auswerteeinheit 13 mit Speichereinheiten und Recheneinheiten, beispielsweise einem Mikroprozessor, weitergeleitet. In der Auswerteeinheit 13 werden die Messwerte in die Drehbewegung charakterisierende Kenngrössen, wie beispielsweise Drehbeschleunigung, Drehgeschwindigkeit und Auslenkwinkel, umgeformt. Aus diesen Kenngrössen wird nach vorgebbaren Kriterien auf einen zu erwartenden Gefährdungsgrad des Anwenders geschlossen, beispielsweise indem der zu erwartende Auslenkwinkel oder eine Unfallwahrscheinlichkeit bestimmt wird. Die in der Auswerteeinheit 13 bestimmten Grössen werden einer Vergleichseinheit 14 zugeführt, die bei Überschreiten eines, vorzugsweise vorgebbaren, Schwellenwertes ein Signal erzeugt. Dieses Signal wird einerseits an den Antriebsmotor 8 weitergeleitet, um diesen bei erkanntem, zu hohem Gefährungsgrad des Anwenders automatisch abzuschalten. Andererseits aktiviert das von der Vergleichseinheit generierte Signal eine Sicherheitseinrichtung 11, die in unmittelbarer Nachbarschaft der Drehspindel 6 vorgesehen ist. Die Sicherheitseinrichtung 11 wirkt somit mit der Detektionseinrichtung 12 zusammen, indem sie in Abhängigkeit der von deren Sensoren erfassten und von der Auswerteeinheit 13 verarbeiteten Messwerte aktiviert wird. Mit Hilfe der Sicherheitseinrichtung 11 wird die Auslenkbewegung des Gehäuses 2 um die Drehachse A der Drehspindel 6 unterdrückt, indem das Gehäuse 2 und die durch das Werkzeug 7 blockierte Drehspindel 6 drehfest miteinander gekoppelt werden.

In Serie zur der in Nachbarschaft zur Drehspindel 6 angeordneten Sicherheitseinrichtung 11 ist im Antriebsstrang 9 für die Drehspindel 6 eine Überlastrutschkupplung 10 vorgesehen. Die serielle Anordnung der über die Detektionseinrichtung 12 automatisch aktivierbaren Sicherheitseinrichtung 11 und der Überlastrutschkupplung 10 im Antriebsstrang 9 für die Drehspindel 6 bietet dem Anwender grösstmöglichen Schutz und verhindert gefährdende Situationen, in denen er von hohen Reaktionsdrehmomenten überrascht werden könnte. Die Detektionseinrichtung 12, die Auswerteeinheit 13, die Vergleichseinheit 14, der Antriebsmotor 8 und die Sicherheitseinrichtung 11 sind über Signalleitungen 15, 16, 17, 18 miteinander verbunden.

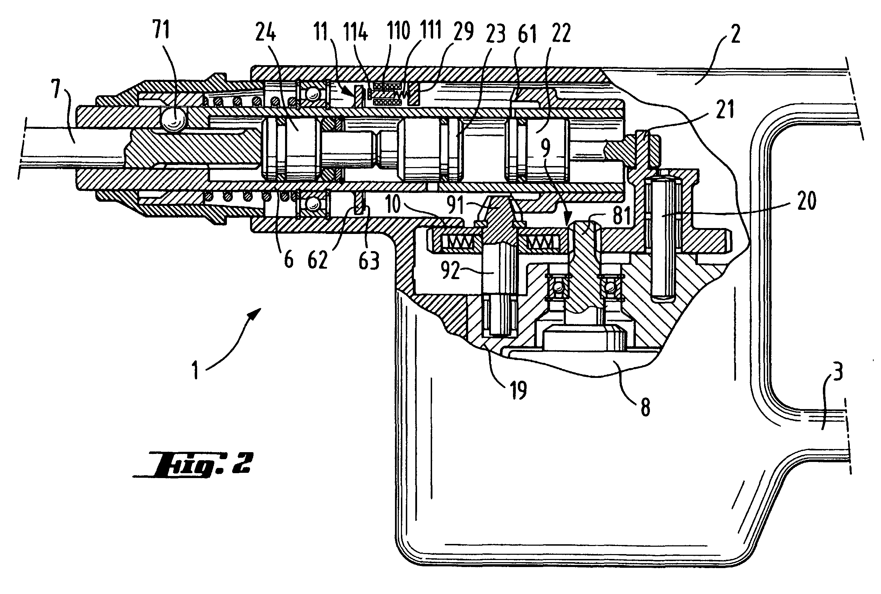

Das in Fig. 2 dargestellte Handgerät 1 ist teilweise geschnitten. Insbesondere handelt es sich um ein Hammer-Bohrgerät, das mit einem Axialschlagwerk ausgestattet ist, welches auf das in eine Werkzeugaufnahme 71 eingesetzte Bohrwerkzeug 7 im Betrieb axiale Schläge ausübt. Die Werkzeugaufnahme 71 ist in axialer Verlängerung der Drehspindel 6 angeordnet und drehfest mit ihr verbunden. Die Drehspindel 6 wird über ein Getriebe 9 vom Antriebsmotor 8 angetrieben. Dazu kämmt die Verzahnung einer Motorwelle 81 mit der Verzahnung der Überlastrutschkupplung 10, deren abtriebsseitiger Teil drehfest mit einer Welle 92 verbunden ist, die in einer dem Gehäuse 2 zugehörigen Abstützplatte 19 gelagert ist und ein Kegelstirnrad 91 trägt. Das Kegelstirnrad 91 greift in die Verzahnung eines drehfest mit der Drehspindel 6 verbundenen Zahnrads 61 ein und überträgt die Drehbewegung der Welle 92 auf die Drehspindel 6.

Die Motorwelle 81 treibt auch eine aufrecht stehende Antriebswelle 20 des Schlagwerks. Ein Zapfen 21 ragt exzentrisch von der Stirnseite der Welle 20 und ist mit einem Erregerkolben 22 des Schlagwerks verbunden, der in der hohlen Drehspindel 6 geführt ist. Indem der Erregerkolben 22 exzentrisch an der Welle 20 angelenkt ist, wird die Rotation der Antriebswelle 20 in eine Hin- und Herbewegung des Erregerkolbens 22 im Inneren der Drehspindel 6 umgewandelt. Der Erregerkolben 22 wirkt mit einem Flugkolben 23 zusammen, der ebenfalls in der Drehspindel 6 axial verschiebbar ist. Ein zwischen dem Erregerkolben 22 und dem Flugkolben 23 angeordnetes Luftpolster verhindert ein Zusammenprallen der beiden Kolben. Der Flugkolben 23 schlägt im Betrieb gegen ein Döpperelement 24, welches in die Werkzeugaufnahme 71 ragt und die axialen Schläge auf das Werkzeug 7 überträgt.

Für den Fall, dass das Werkzeug 7 im Betrieb blockiert, ist das Handgerät mit einer Sicherheitseinrichtung 11 ausgestattet, die in unmittelbarer Nachbarschaft zur Drehspindel 6 angeordnet ist. Bei Aktivierung der Sicherheitseinrichtung 11 durch die Detektionseinrichtung 12 wirken wenigstens zwei Bauteile zusammen, von denen eines mit der Drehspindel 6 und das andere mit dem Gehäuse 2 verbunden ist. Zu diesem Zweck ist die Drehspindel 6 mit einem Flansch 62 versehen, der den Umfang der Drehspindel 6 überragt und an seiner der Sicherheitseinrichtung zugewandten Flachseite vorzugsweise mit einem Reibbelag 63 ausgestattet ist. Mit Vorzug ist der Reibbelag 63 lösbar am Flansch 62 befestigt, um ihn bei Bedarf austauschen zu können.

Fig. 3 zeigt die Sicherheitseinrichtung 11 in vergrössertem Massstab. Sie umfasst ein Schubelement 110, das von einer Feder 111 in Richtung des von der Drehspindel 6 abragenden Flansches 62 vorgespannt ist. Die Feder 111 stützt sich an einem Gehäusevorsprung 29 ab. Das Schubelement 110 ist in einer Magnetspule 112, die am Gehäuse 2 befestigt ist, geführt und axial verschiebbar gelagert. An seinem dem Flansch 62 zugekehrten Ende trägt das Schubelement einen Bremsschuh 114, der mit einem Reibbelag 115 belegt ist. Der Reibbelag 115 und/oder der Bremsschuh sind mit Vorteil lösbar befestigt, um sie bei Bedarf auswechseln zu können. Am Flansch 62 kann, wie in Fig. 3 dargestellt, ebenfalls ein Reibbelag 63 vorgesehen sein. Im Normalfall ist die Magnetspule 112 bestromt und das Schubelement 110 wird im Magnetfeld der Magnetspule 112 gegen die Kraft der Feder 111 von dem Flansch 62 wegbewegt und im Abstand davon gehalten. Bei Detektion eines Blockierfalls wird durch eine Signal die Stromzufuhr zur Magnetspule 112 unterbrochen. Das Magnetfeld, welches das Schubelement 110 im Abstand vom Flansch 62 hält, bricht zusammen, und die Feder 111 presst das Schubelement 110 gegen den Flansch 62. Die Reibbeläge 63, 115 am Flansch 62 bzw. am Bremsschuh 114 sind derart beschaffen, dass das Gehäuse 2 und die Drehspindel durch Reibkraft drehfest miteinander gekoppelt werden. Da ja das Werkzeug 7 blockiert, ist auch die Drehspindel 6 blockiert. Durch die drehfeste Kopplung des Gehäuses 2 an die blockierte Drehspindel 6 ist somit auch das Gehäuse 2 gegen ein Auslenken infolge des Reaktionsdrehmoments gesichert. Indem im Blockierfall die gesamte Masse des Handgeräts 1 drehfest mit dem Werkzeug 7 gekoppelt ist, kann das Werkzeug 7 auch wieder losgerissen werden und der Bohrvorgang kann ohne Unterbrechung fortgesetzt werden.

Die Sicherheitseinrichtung 11 wird über die Detektionseinrichtung 12 aktiviert, welche auch mit dem Antriebsmotor 8 zusammenwirkt. Gleichzeitig mit der Aktivierung der Sicherungseinrichtung 11 wird daher auch der Antriebsmotor 8 abgeschaltet. Das Restmoment des Antriebsmotors 8 wird von der in Serie zur Sicherheitseinrichtung 11 angeordneten Überlastrutschkupplung 10 aufgenommen, welche den Antriebsstrang 9 vom Antriebsmotor 8 trennt. Bei erneuter Inbetriebnahme des Handgeräts 1, nach dem Lösen des Werkzeugs 7, wird der ursprüngliche Zustand wieder hergestellt und die drehfeste Kopplung zwischen dem Gehäuse 2 und der Drehspindel 6 wird durch Bestromung der Magnetspule 112 aufgehoben. Dadurch ist das Handgerät 1 für einen eventuellen weiteren Blockierfall des Werkzeugs 7 vorbereitet, um dem Anwender grösstmöglichen Schutz zu bieten.

## Patentansprüche

1. Motorisch betriebenes Handgerät, insbesondere Bohrgerät, mit einer aus einem Gehäuse (2) ragenden Drehspindel (6) zur Übertragung einer Drehbewegung von einem Antriebsmotor (8) auf ein Werkzeug (7) und einer Sicherheitseinrichtung (11), die bei plötzlich blockierendem Werkzeug (7) ein Auslenken des Gehäuses (2) des Handgeräts um die Achse (A) der Drehspindel (6) unterbindet, wobei die Sicherheitseinrichtung (11) mittels einer Detektionseinrichtung (12) für den Blockierfall des Werkzeugs (7) aktivierbar ist, wobei die Sicherheitseinrichtung (11) innerhalb des Gehäuses (2) radial benachbart zur Drehspindel (6) angeordnet ist und wenigstens zwei, im Aktivierungsfall reibschlüssig zusammenwirkende Bauteile (62, 114) umfasst, von denen eines mit dem Gehäuse (2) und das andere mit der Drehspindel (6) verbunden ist und die im Blockierfall des Werkzeugs (7) das Gehäuse (2) und die Drehspindel (6) durch Reibkraft drehfest miteinander koppeln, wobei im Antriebsstrang (9) für die Drehspindel (6) eine Überlastrutschkupplung (10) vorgesehen ist, die in Serie zur Sicherheitseinrichtung (11) angeordnet ist, und wobei
die Sicherheitseinrichtung (11) bei Detektion eines Blockierfalls des Werkzeugs (7) elektromechanisch aktivierbar ist,
**dadurch gekennzeichnet, dass** die im Aktivierungsfall zusammenwirkenden Bauteile (62, 110) durch Federkraft (111) derart aufeinander vorgespannt sind, dass im ausgeschalteten Zustand des Handgeräts (1) das Gehäuse (2) und die Drehspindel (6) drehfest miteinander gekoppelt sind.

2. Handgerät nach Anspruch 1, **dadurch gekennzeichnet, dass** eines der zusammenwirkenden Bauteile (114) an einem federbelasteten (111) Schubelement (110) angeordnet ist, das im Magnetfeld einer Magnetspule (112) gelagert und axial verschiebbar ist, die im Normalbetrieb des Handgeräts (1) bestromt ist und bei Detektion eines Blockierfalls des Werkzeugs (7) stromlos schaltbar ist, wodurch die zusammenwirkenden Bauteile der Sicherheitseinrichtung (11) in Reibschluss bringbar sind.

3. Vorrichtung nach Anspruch 2, **dadurch gekennzeichnet, dass** das zweite der zusammenwirkenden Bauteile von einem die Drehspindel überragenden Flansch (62) mit planer Anlagefläche gebildet ist.

4. Handgerät nach einem der Ansprüche 1 - 3, **dadurch gekennzeichnet, dass** wenigstens eines der zusammenwirkenden Bauteile (114, 62) der Sicherheitseinrichtung (11) einen Reibbelag (115; 63) aufweist, der vorzugsweise auswechselbar ist.

## Claims

1. Motor-powered hand-held appliance, more particularly a drill, having a head spindle (6) which projects from a casing (2) to transmit a rotating motion from a drive motor (8) to a tool (7), and having a safety device (11) which in the event that the tool (7) suddenly jams prevents the casing (2) of the hand-held appliance from pulling away around the axis (A) of the head spindle (6), the safety device (11) being adapted to be activated by means of a detecting device (12) which detects when the tool (7) has jammed, the safety device (11) being arranged radially adjacent to the head spindle (6) within the casing (2) and comprising at least two components (62, 114) which cooperate with one another in a frictionally engaged manner when activated, one of which is joined to the casing (2) and the other to the head spindle (6) and which use frictional force to couple together the casing (2) and the head spindle (6) in a way that prevents rotation in the event that the tool (7) jams, and there being provided in the drive train (9) for the head spindle (6) an overload slipping clutch (10) which is arranged in series with the safety device (11), and the safety device (11) being adapted to be activated electromechanically in the event that jamming of the tool (7) is detected,
**characterised in that** the components (62, 110) which cooperate with one another in the event of activation are biased relative to one another by spring force (111) in such a manner that when the hand-held appliance (1) is switched off, the casing (2) and the head spindle (6) are coupled to one another in a way that prevents rotation.

2. Hand-held appliance according to claim 1, **characterised in that** one of the cooperating components (114) is arranged on a spring-loaded (111) sliding member (110) which is mounted and is axially displaceable in the magnetic field of a magnet coil (112) which is energised when the hand-held appliance (1) is in normal operating mode and can be de-energised in the event that jamming of the tool (7) is detected, thereby enabling the cooperating components of the safety device (11) to become frictionally engaged.

3. Hand-held appliance according to claim 2, **characterised in that** the second of the cooperating components is constituted by a flange (62) with a planar contact surface, which juts out past the head spindle.

4. Hand-held appliance according to any of claims 1 to 3, **characterised in that** at least one of the cooperating components (114, 62) of the safety device (1) has a friction lining (115; 63) which is preferably interchangeable.

## Revendications

1. Outil portatif, en particulier outil de forage, actionné par un moteur, comprenant une broche rotative (6) dépassant d'un carter (2) pour transmettre un mouvement de rotation d'un moteur d'entraînement (8) à un outil (7) et un dispositif de sécurité (11) qui, en cas de blocage brutal de l'outil (7), empêche le carter (2) de l'outil portatif de s'écarter de l'axe (A) de la broche rotative (6), le dispositif de sécurité (11) pouvant être activé au moyen d'un dispositif de détection (12) du blocage de l'outil (7), le dispositif de sécurité (11) étant disposé à l'intérieur du carter (2) au voisinage radial de la broche rotative (6) et comprenant au moins deux éléments structurels (62, 114) qui coopèrent par friction en cas d'activation, dont un est relié au carter (2) et l'autre à la broche rotative (6) et qui, en cas de blocage de l'outil (7), solidarisent en rotation par un effort de friction le carter (2) et la broche rotative (6), dans la chaîne de transmission (9) de la broche rotative (6) étant prévu un accouplement à friction de surcharge (10) qui est monté en série par rapport au dispositif de sécurité (11), et le dispositif de sécurité (11) pouvant être activé par voie électromécanique en cas de détection d'un blocage de l'outil (7), **caractérisé en ce que** les éléments structurels (62, 110) coopérant en cas d'activation sont précontraints l'un vers l'autre par une force élastique (111), de façon qu'à l'état déconnecté de l'outil portatif (1) le carter (2) et la broche rotative (6) soient solidarisés en rotation l'un à l'autre.

2. Outil portatif selon la revendication 1, **caractérisé en ce qu'**un des éléments structurels coopérants (114) est disposé sur un élément coulissant (110) à sollicitation élastique (111) qui est monté dans le champ magnétique d'une bobine magnétique (112) et est déplaçable axialement, celle-ci étant alimentée en courant lors du fonctionnement normal de l'outil portatif (1) et étant privée de courant en cas de détection d'un blocage de l'outil (7), auquel cas les éléments structurels coopérants du dispositif de sécurité (11) créent une liaison par friction.

3. Dispositif selon la revendication 2, **caractérisé en ce que** le second des éléments structurels coopérants est formé par un collet (62) à surface d'appui plane qui dépasse de la broche rotative.

4. Outil portatif selon une des revendications 1 à 3, **caractérisé en ce qu'**au moins un des éléments structurels coopérants (114, 62) du dispositif de sécurité (11) comporte une garniture de friction (115 ; 63) qui est de préférence remplaçable.
